Europäisches Patentamt

European Patent Office

Office européen des brevets

(19)

(11) Veröffentlichungsnummer: **0 224 840 B1**

(12) # EUROPÄISCHE PATENTSCHRIFT

(45) Veröffentlichungstag der Patentschrift:
05.09.90

(51) Int. Cl.⁵: **G01B 11/02**

(21) Anmeldenummer: 86116296.4

(22) Anmeldetag: 24.11.86

(54) Opto-elektronischer Längenmesser.

(30) Priorität: 28.11.85 DE 3542140

(43) Veröffentlichungstag der Anmeldung:
10.06.87 Patentblatt 87/24

(45) Bekanntmachung des Hinweises auf die Patenterteilung:
05.09.90 Patentblatt 90/36

(84) Benannte Vertragsstaaten:
AT BE CH DE FR GB IT LI NL

(56) Entgegenhaltungen:
DE-A- 1 477 520
DE-A- 2 838 968
US-A- 1 854 760
US-A- 4 425 061

PATENTS ABSTRACTS OF JAPAN, Band 5,
Nr. 201 (P-94)[873], 19. Dezember 1981; &
JP-A-56 120 901 (TOYODA KOKI K.K.) 22-09-1981
PATENTS ABSTRACTS OF JAPAN, Band 7,
Nr. 283 (M-263)[1428], 16. Dezember 1983; &
JP-A-58 160 044 (MITSUBISHI JUKOGYO
K.K.) 22-09-1983

(73) Patentinhaber: Siemens Aktiengesellschaft,
Wittelsbacherplatz 2, D-8000 München 2(DE)

(72) Erfinder: Pötsch, Edmund, Dipl.-Ing., Augsburger
Strasse 41, D-8901 Königsbrunn(DE)

## Beschreibung

Die Erfindung betrifft einen opto-elektronischen Längenmesser mit einem auf einer Einstellschiene verstellbaren und feststellbaren opto-elektronischen Meßkopf und einem Längsteil.

Abstands- und Längenmesser werden im Werkzeugbau häufig benötigt. So ist es beispielsweise notwendig, den Vorschub von Werkzeugen, z.B. die Eintauchtiefe von Bohrern, zu begrenzen. Dazu werden an den Bohrerschäften sogenannte Längeneinstellringe aufgezogen. Diese Ringe müssen in einem genauen, von der Werkzeugspitze an vorgegebenen Abstand angebracht werden. Dies geschieht dadurch, daß mit Hilfe einer Einstellspindel die Ringe aufgeschoben und anschließend mittels einer Längenmessung der vorgegebene Abstand ermittelt wird. Wenn die Einstellspindel vor der Messung nicht zurückgestellt worden ist, kann es vorkommen, daß die Werkzeugspitzen, wie z.B. die Spitzen von Bohrern, eingerissen werden, wodurch das bearbeitete Werkstück, wie z.B. ein Leiterplattenpaket, verdorben wird.

In den "patent abstracts of Japan", Band 5, No. 201 (P-94)873 vom 19. Dezember 1981 wird eine Positionsmeßeinrichtung beschrieben, bei der der Rand einer waagrechten Bohrung mit Hilfe eines Projektors auf einen Sensor abgebildet wird, wobei eine Abbildung nur dann erfolgt, wenn der Projektorlichtstrahl parallel zu einer im Werkstück befindlichen durchgehenden Bohrung verläuft, die ihrerseits wiederum senkrecht zur Einspannrichtung ist.

Aufgabe der vorliegenden Erfindung ist es, eine Meßeinrichtung zum Längen- und Abstandsmessen zu schaffen, bei der menschliche Unzulänglichkeiten weitgehend ausgeschaltet sind.

Zur Lösung dieser Aufgabe wird ein opto-elektronischer Längenmesser verwendet, der derart ausgebildet ist, daß der Meßkopf eine in einer Richtung angeordnete Aufnahmebohrung zum Einschieben des Längsteiles aufweist und in wenigstens einer anderen senkrecht dazu verlaufenden Richtung die Aufnahmebohrung kreuzende Querbohrungen enthält, an deren einem Ende je ein Lichtsender und an deren anderem Ende je ein Lichtempfänger angeordnet ist, und daß den Lichtempfängern eine elektronische Meßanordnung zur Messung der Eindringtiefe des Längsteiles in die Aufnahmebohrung nachgeschaltet ist.

Weiterhin sieht die Erfindung vor, daß das in den Meßkopf einführbare Längsteil ein von einer Vorschubspindel über einen Spindelantrieb geführtes Werkzeug ist, auf dessen Werkzeugschaft in definiertem Abstand ein Vorschubbegrenzungsmittel aufgebracht ist, daß vor dem Meßkopf ein Anschlag für das aufzubringende Vorschubbegrenzungsmittel vorgesehen ist und daß bei jeder Querbohrung dem Lichtsender und dem Lichtempfänger zusätzlich eine Blende vorgeschaltet ist.

Durch diese Maßnahme kann keine Beschädigung der Werkzeugschneidflächen mehr eintreten, weil die Messung berührungslos erfolgt.

Soll der opto-elektronische Längenmesser zur Abstandsmessung verwendet werden, läßt er sich so ausbilden, daß die Aufnahmebohrung des Meßkopfes an ihrem vorderen Ende in eine Kammer mündet, in der eine Rückstellfeder liegt, die gegen einen Flansch des in die Aufnahmebohrung hineinragenden als Meßdorn ausgebildeten Längsteiles drückt und daß bei jeder Querbohrung dem Lichtsender und dem Lichtempfänger je eine Blende vorgeschaltet ist.

Einen opto-elektronischen Längenmesser mit einstellbarer Lichtspaltbreite erhält man dadurch, daß im Meßkopf als Querbohrungen zwei senkrecht aufeinanderstehende Querbohrungen und eine diagonal zu diesen ein Achsenkreuz bildenden Querbohrungen eine Spülgas-Kanalbohrung, die auf gleicher Höhe liegt und durch die ein unter Druck eingeleitetes Gas geblasen werden kann, angebracht sind, daß die Aufnahmebohrung des Meßkopfes mit einem Gewinde versehen ist, in die von beiden Seiten je eine Justierschraube, die mit einer Längsbohrung versehen ist, soweit eingeschraubt ist, bis der zwischen beiden Justierschrauben entstehende Spalt genau auf den durch die Lichtsender und Lichtempfänger definierten optischen Achsen liegt.

Je nach Verwendung speziell ausgeführter Blenden läßt sich die Charakteristik des Einstellvorganges variieren. So kann die Blende entweder rechteckförmig ausgebildet sein, was zu einer linear abfallenden Empfängercharakteristik führt, sie kann aber auch kreuzförmig ausgebildet sein, so daß sich drei abfallende Charakteristikbereiche mit unterschiedlicher Steigung ergeben und sie kann zudem dreieckförmig ausgebildet sein, so daß eine stetig sich ändernde Charakteristik erhalten wird.

Die Meßanordnung kann dabei aus einem Meßverstärker und diesem nachgeschalteten Anzeigern bestehen, wobei die Anzeiger selbst wieder entweder Digital- oder Analoganzeiger sein können. Auch ist es möglich, anstelle der Anzeiger oder zusätzlich dazu eine Automatenschnittstelle vorzusehen. In letzterem Falle wird eine robotergesteuerte automatische Justage möglich. Zudem wird durch die Anzeiger die menschliche Unzulänglichkeit weitgehend beseitigt, wodurch Justierfehler vermieden werden.

Um einen jeweils eindeutigen Meßwert bei mehreren lichtstrahlbeaufschlagten Querbohrungen zu erhalten, sind zudem Mittel zur Privilegierung jeweils eines der beiden Lichtkanäle in Abhängigkeit von dem zuerst erreichten vorgegebenen Richtwert vorgesehen.

Als Werkzeug kann hierbei z.B. ein Bohrer verwendet werden, auf den als Vorschubmittel ein Einstellring aufgeschoben wird.

Anhand der Ausführungsbeispiele nach den Fig. 1 bis 6 wird die Erfindung näher erläutert. Es zeigen:

Fig. 1 eine schematische Darstellung des opto-elektronischen Längenmessers,

Fig. 2 eine schematische Darstellung eines ersten opto-elektronischen Meßkopfes,

Fig. 3 eine schematische Darstellung eines zweiten opto-elektronischen Meßkopfes,

Fig. 4 eine schematische Darstellung eines dritten opto-elektronischen Meßkopfes im Längs- und Querschnitt,

Fig. 5 eine Schaltungsanordnung zur Privilegierung jeweils eines der beiden Lichtkanäle (Kreuzkopfsteuerung),

Fig. 6 das Ausgangssignal einer Kreuzkopfsteuerung,

Fig. 7 eine rechteckförmige Blende mit dazugehöriger Charakteristik,

Fig. 8 eine kreuzförmige Blende mit dazugehöriger Charakteristik und

Fig. 9 eine dreieckförmige Blende mit dazugehöriger Charakeristik.

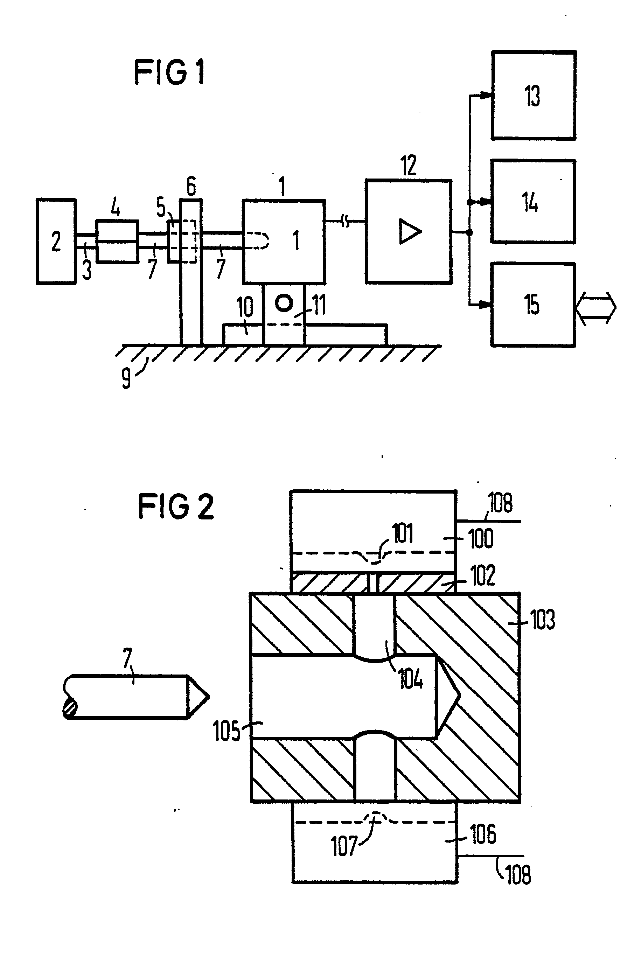

Fig. 1 zeigt eine schematische Darstellung eines opto-elektronischen Eindringtiefenmessers. Das Werkzeug 7, in vorliegendem Fall ein Bohrer, auf den ein Längenein stellring 5 als Vorschubbegrenzungsmittel aufgebracht werden soll, wird mittels einer Spannzange 4 auf einer Vorschubspindel 3, die über einen Spindelantrieb 2 angetrieben wird, befestigt. Mit Hilfe dieser Spindel wird der Bohrer in waagrechter Richtung vorwärts geführt, nachdem der Längeneinstellring über die Bohrerspitze aufgeschoben worden ist. Mit Hilfe des Anschlags 6 wird der Einstellring solange in Richtung des Bohrerschaftes verschoben, solange die Vorschubspindel 3 in waagrechter Richtung bewegt wird. Bei dieser Bewegung dringt die Spitze des Bohrers 7 in den opto-elektronischen Meßkopf 1 ein, der mit Hilfe eines Klemmstückes 11 auf der Einstellschiene 10 waagrecht verstellbar und feststellbar ist. Die Eindringtiefe wird im opto-elektronischen Meßkopf festgestellt und in Form von elektrischen Signalen an den Meßverstärker 12 weitergegeben, der dann die verstärkten Signale an die Anzeigevorrichtungen 13 und 14, die Digital- oder Analoganzeigen sein können, oder an eine Automatenschnittstelle 15 weiterführt.

Der opto-elektronische Meßkopf ist in Fig. 2 näher dargestellt. Der Meßkopfgrundkörper 103 enthält eine Aufnahmebohrung 105 für den Prüfling, wie z.B. den Bohrer 7, und senkrecht dazu eine Querbohrung 104. Am unteren Ende dieser Querbohrung 104 ist ein Lichtsender 106 befestigt, der einen Lichtstrahl über die Linse 107 durch die Querbohrung 104 schickt. Am anderen Ende der Querbohrung 104 befindet sich ein Lichtempfänger 100, der die Lichtstrahlung über eine Linse 101 und über eine Blende 102 empfängt. Je nach Eindringtiefe wird die Lichtstrahlung zwischen Sender und Empfänger mehr oder weniger unterbrochen und damit werden auch die ein Abbild der Intensität der Lichtstrahlung ergebenden elektrischen Ausgangssignale auf den Anschlußleitungen 108 verändert.

Da die Bohrerspitze abhängig von der jeweiligen Seitenlage unterschiedlich ausgeformt ist, könnten je nach Bohrerstellung unterschiedliche Eindringtiefen mit dem gleichen elektrischen Signal verbunden sein. Zur Vermeidung dieses Fehlers wird daher senkrecht zur ersten Querbohrung 104 und zur Aufnahmebohrung 105 eine weitere, in Fig. 1 nicht dargestellte Querbohrung angebracht, und beide Querbohrungen in ihrer Signalabgabe programmgemäß so verbunden, daß jeweils derjenige Lichtstrahl, der das erste vorgegebene Meßergebnis liefert, gegenüber dem zweiten Lichtstrahl privilegiert ist. Dadurch werden Meßfehler, die durch unterschiedliche Ausgestaltung der Spitzen der Prüfwerkzeuge entstehen, ausgeschaltet.

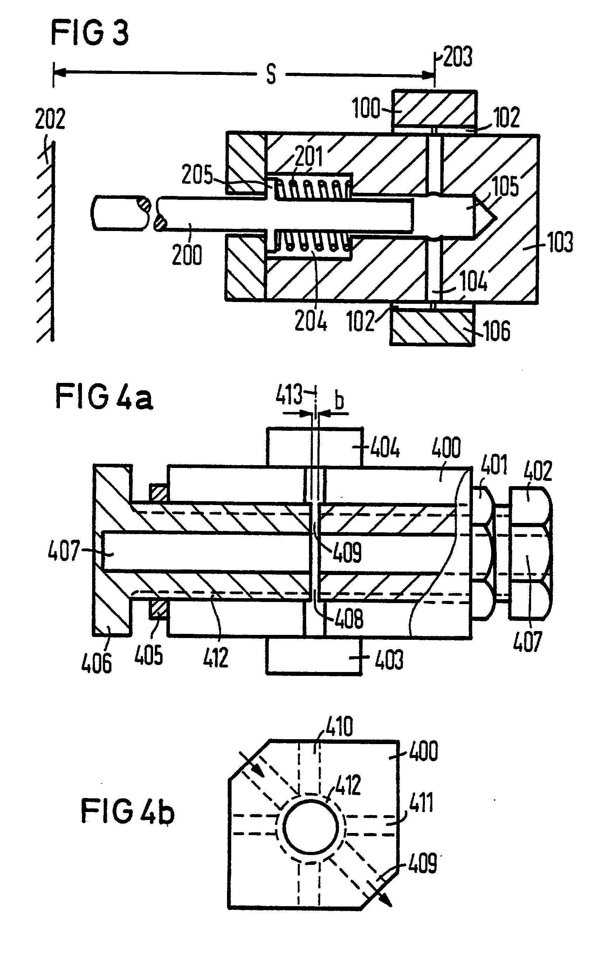

Einen opto-elektronischen Längenmesser zur Abstandsmessung zeigt Fig. 3. Der Meßkopf kann zur Erfassung des Abstandes s eines Werkstückes 202 von der durch den Blendenschlitz durch die Blenden 102 verlaufenden optischen Mittellinie 203 verwendet werden. Der Meßkopf wird mit einem Meßdorn 200 und einer in dem Hohlraum 204 angeordneten Rückstellfeder 201, die auf den Flansch 205 des Meßdornes (200) drückt, versehen. Bei Vorwärtsbewegung des Werkstückes 202 trifft dieses auf den Meßdorn 200 auf und schiebt diesen in die Aufnahmebohrung 105, bis der Meßdorn den Lichtstrahl, der vom Strahlungssender 106 abgegeben wird, unterbricht. Vom Strahlungsempfänger 100 wird dadurch eine der Blendencharakteristik entsprechnde Ausgangsspannung abgegeben, die von der Auswerteelektronik 12, 13, 14, 15 verarbeitet wird.

Die Fig. 4a und 4b zeigen eine Ausgestaltung des Meßkopfes mit einstellbarem und feststellbarem Blendenspalt 408. Im Grundkörper 400 sind neben der Gewindebohrung 412 die Querbohrungen 410 und 411 und 409 angebracht. Die Querbohrungen 410, 411 und 409 liegen auf gleicher Höhe. 410 und 411 führen die Lichtstrahlen der im rechten Winkel zueinander angeordneten Strahlschranken. Die Querbohrung 409 führt ein unter Druck eingeleitetes Gas (z. B. Luft). Die Gewindebohrung 412 nimmt die von beiden Seiten des Grundkörpers 400 her eingeschraubten Justierschrauben 402 und 406 auf. Die Justierschrauben sind mit einer Bohrung 407 versehen, die den Prüfling aufnehmen kann. Die Justierschrauben 402 und 406 werden soweit in den Grundkörper 400 eingeschraubt, bis der Blendenspalt 418 genau auf den optischen Achsen 413 der Strahlschranken liegt.

Die Justierschrauben 402 und 406 können mit den Kontermuttern 401 und 405 festgestellt werden.

Der Spülgas-Kanal 409 ist so angeordnet, daß der Blendenspalt 408 stets von Verunreinigungen freigeblasen wird.

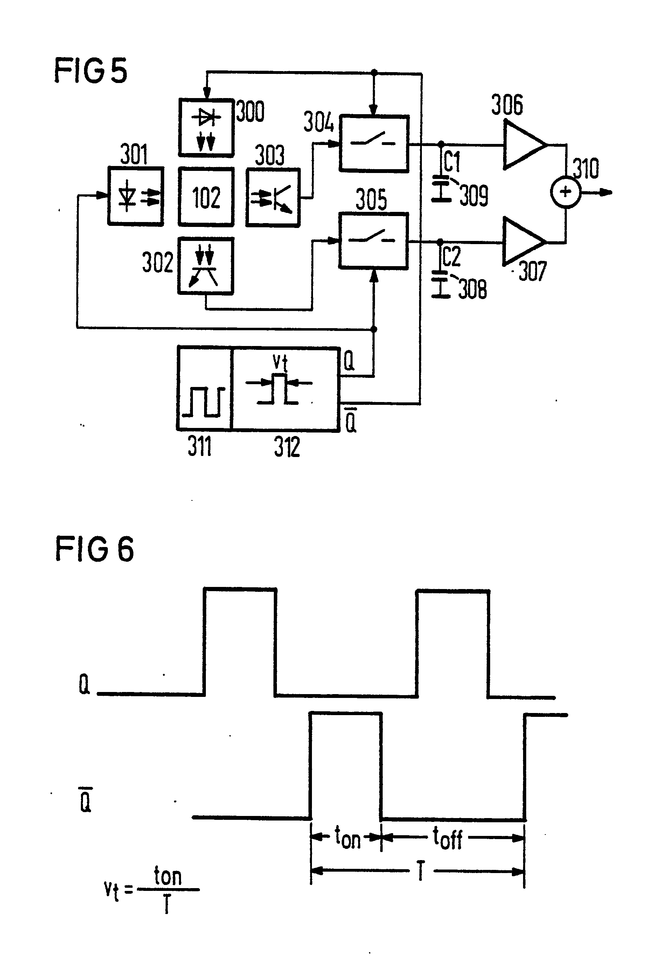

Die elektronische Kreuzkopfsteuerung nach Fig. 5 steuert die um 90° gegeneinander versetzt angeordneten Lichtsender 300, 301 und Lichtempfänger 302 und 303 derart wechselseitig an, daß sich die beiden Strahlwege nicht beeinflussen.

Der Oszillator 311 steuert das Flip-Flop 312 an. An den Ausgängen Q und $\bar{Q}$ des Flip-Flop 312 stehen zwei um 180° gegeneinander phasenverschobene Rechtecksignale mit einem Tastverhältnis

$$V_t \frac{t_{on}}{T} < 0,5$$

zur Ansteuerung der Lichtsender 300 bzw. 301 und der Analogschalter 304 und 305 zur Verfügung. Es wird also abwechselnd, um 180° versetzt Strahlschranke 300-302 und Strahlschranke 301-303 angesteuert. Gleichzeitig wird abwechselnd der der jeweiligen Strahlschranke zugeordnete Analogschalter 304 bzw. 305 geschlossen und der Kondensator 309 bzw. 308 lädt sich auf den Spannungswert auf, der während der on-Phase der zugehörigen Strahlschranke vom Strahlempfänger 303 bzw. 302 abgegeben wird. Die über den Kondensatoren anstehende Spannung bleibt während der off-Phase der zugehörigen Strahlschranke erhalten und gelangt über den zugeordneten Verstärker V306 bzw. V307 auf die Addierstufe 310, die die beiden getrennt erzeugten Signale addiert. Das Ausgangssignal entspricht richtungsunabhängig vom Drehwinkel der Bohrerspitze der Eindringtiefe des Prüflings in den Blendenspalt.

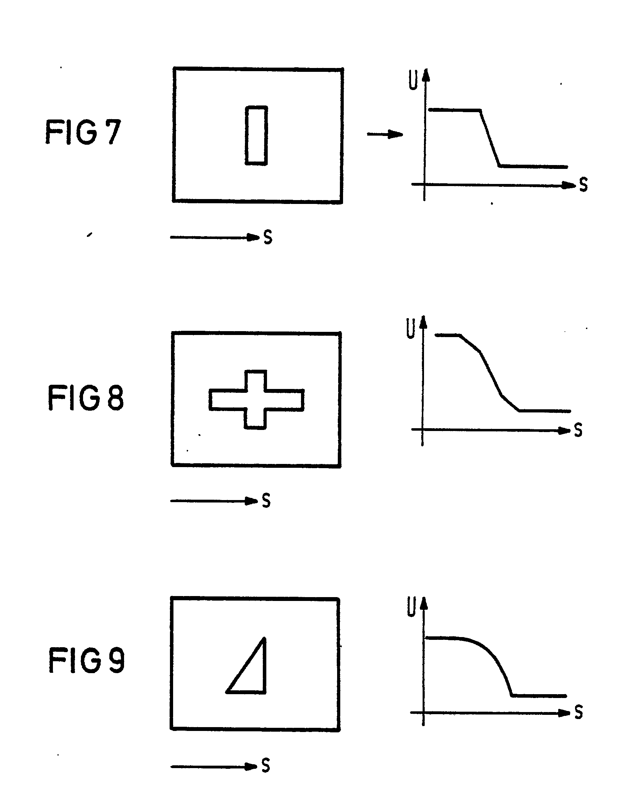

Die Fig. 7 bis 9 zeigen die Abhängigkeit der Empfangscharakteristik von der jeweiligen Blendenform. So erhält man bei einer Blendenform nach Fig. 7, die rechteckig ausgeführt ist, eine Empfangscharakteristik, deren Maximal-und Minimalwert über eine lineare Funktion erhalten wird. Eine im schrägen Bereich dreiteilige Kennlinie erhält man mit einer kreuzförmigen Blende nach Fig. 8, und einen kontinuierlichen Übergang im Anfangsbereich mit zunehmender Steigung von der Maximal- zur Minimalanzeige erhält man bei einer dreieckförmigen Blendenform nach Fig. 9. Dabei ist jeweils die am Ausgang des Lichtempfängers erhaltene Spannung in Abhängigkeit von der Eindringtiefe S des Meßobjektes dargestellt.

Bezugszeichenliste

1 = Opto-elektronischer Meßkopf
2 = Spindelantrieb
3 = Vorschubspindel
4 = Spannzange
5 = Stellring
6 = Anschlag
7 = Werkzeug (Bohrer)
10 = Einstellschiene
11 = Klemmstück
12 = Meßverstärker
13 = Anzeigevorrichtung
14 = Digital- oder Analoganzeiger
15 = Automatenschnittstelle
100 = Lichtempfänger
101 = Linse
102 = Blende
103 = Meßkopfgrundkörper
104 = Querbohrung
105 = Aufnahmebohrung
106 = Lichtsender
107 = Linse
108 = Anschlußleitung
200 = Meßdorn
201 = Rückstellfeder
202 = Werkstück
203 = Mittellinie
204 = Hohlraum
205 = Flansch
300 = Lichtsender
301 = Lichtsender
302 = Lichtemfänger
303 = Lichtempfänger
304 = Analogschalter
305 = Analoschalter
306 = Verstärker
307 = Verstärker
308 = Kondensator
309 = Kondensator
310 = Addierstufe
311 = Oszillator
312 = Flip-Flop
400 = Grundkörper
401 = Kantenmutter
402 = Justierschraube
403 = Lichtsender
404 = Lichtempfänger
405 = Kantenmutter
406 = Justierschraube
407 = Bohrung
408 = Blendspalt
409 = Querbohrung
410 = Querbohrung
411 = Querbohrung
412 = Gewindebohrung
413 = optische Achsen

**Patentansprüche**

1. Opto-elektronischer Längenmesser, mit einem auf einer Einstellschiene (10) verstellbaren und feststellbaren opto-elektronischen Meßkopf (1) und einem Längsteil (7, 200), dadurch gekennzeichnet, daß der Meßkopf (1) eine in einer Richtung angeordnete Aufnahmebohrung (105) zum Einschieben des Längsteiles (7, 200) aufweist und in wenigstens einer anderen senkrecht dazu verlaufenden Richtung die Aufnahmebohrung kreuzende Querbohrungen (104, 410, 411) enthält, an deren einem Ende je ein Lichtsender (106) und an deren anderem Ende je ein Lichtempfänger (100) angeordnet ist, und daß den Lichtempfängern (100) eine elektronische Meßanordnung (12 bis 15) zur Messung der Eindringtiefe des Längsteiles (7, 200) in die Aufnahmebohrung (105, 400) nachgeschaltet ist.

2. Opto-elektronischer Längenmesser nach Anspruch 1, dadurch gekennzeichnet, daß das in den Meßkopf (1) einführbare Längsteil ein von einer Vorschubspindel (3) über einen Spindelantrieb (2) geführtes Werkzeug (7) ist, auf dessen Werkzeugschaft in definiertem Abstand ein Vorschubbegrenzungsmittel (5) aufgebracht ist, daß vor dem Meßkopf ein Anschlag (6) für das aufzubringende Vorschubbegrenzungsmittel (5) vorgesehen ist und daß bei jeder Querbohrung dem Lichtsender (106) und dem Lichtempfänger (100) je eine Linse (107) und dem Lichtempfänger (100) zusätzlich eine Blende (102) vorgeschaltet ist.

3. Opto-elektronischer Längenmesser nach Anspruch 1, dadurch gekennzeichnet, daß die Aufnahmebohrung (105) des Meßkopfes (1) an ihrem vorderen Ende in eine Kammer (204) mündet, in der eine Rückstellfeder (201) liegt, die gegen einen Flansch (205) des in die Aufnahmebohrung hineinragenden als Meßdorn ausgebildeten Längsteils (200) drückt und daß bei jeder Querbohrung dem Lichtsender (106) und dem Lichtempfänger (100) je eine Blende (104) vorgeschaltet ist.

4. Opto-elektronischer Längenmesser nach Anspruch 1, dadurch gekennzeichnet, daß im Meßkopf (1) als Querbohrungen zwei senkrecht aufeinanderstehende Querborungen (410, 411) und eine diagonal zu diesen ein Achsenkreuz bildenden Querbohrungen (410, 411) eine Spülgas-Kanalbohrung (409), die auf gleicher Höhe liegt und durch die ein unter Druck eingeleitetes Gas geblasen werden kann, angebracht sind, daß die Aufnahmebohrung (105) des Meßkopfes (1) mit einem Gewinde (412) versehen ist, in die von beiden Seiten je eine Justierschraube (402, 406), die mit einer Längsbohrung (407) versehen ist, soweit eingeschraubt ist, bis der zwischen beiden Justierschrauben (402, 406) entstehende Spalt (418) genau auf den durch die Lichtsender (403) und Lichtempfänger (404) definierten optischen Achsen (413) liegt.

5. Opto-elektronischer Eindringtiefenmesser nach einem der vorhergehenden Ansprüche, dadurch gekennzeichnet, daß Mittel zur Privilegierung einer der Lichtempfänger in Abhängigkeit von einem zuerst erreichten vorgegebenen Richtwert vorgesehen sind.

6. Opto-elektronischer Längenmesser nach einem der Ansprüche 2 und 3, dadurch gekennzeichnet, daß die Blenden (102) eine rechteckförmige Öffnung besitzen.

7. Opto-elektronischer Längenmesser nach einem der vorhergehenden Ansprüche 2 und 3, dadurch gekennzeichnet, daß die Blenden (102) eine kreuzförmige Öffnung besitzen.

8. Opto-elektronischer Längenmesser nach einem der Ansprüche 2 und 3, dadurch gekennzeichnet, daß die Blenden (102) eine dreieckförmige Öffnung besitzen.

9. Opto-elektronischer Längenmesser nach Anspruch 1, **dadurch gekennzeichnet**, daß die Meßanordnung (12...15) aus einem Meßverstärker (12) und einem diesen nachgeschalteten Digitalanzeiger (13) besteht.

10. Opto-elektronischer Längenmesser nach einem der Ansprüche 1 oder 9, **dadurch gekennzeichnet**, daß die Meßanordnung (12...15) aus einem Meßverstärker (12) und einem diesem nachgeschalteten Analoganzeiger (14) besteht.

11. Opto-elektronischer Längenmesser nach einem der Ansprüche 1, 9 und/oder 10, **dadurch gekennzeichnet**, daß die Meßanordnung (12...15) aus einem Meßverstärker (12) und einer Automatenschnittstelle (15) besteht.

12. Opto-elektronischer Längenmesser nach Anspruch 2, **dadurch gekennzeichnet**, daß das Werkzeug (7) ein Bohrer ist.

13. Opto-elektronischer Eindringtiefenmesser nach Anspruch 2, **dadurch gekennzeichnet**, daß das Vorschubbegrenzungsmittel ein Einstellring ist.

**Claims**

1. Opto-electronic length measuring device, having an opto-electronic measuring head (1), which can be adjusted and fixed on an adjustment rail (10), and a longitudinal part (7, 200), characterized in that the measuring head (1) has, arranged in one direction, a receiving bore (105) for inserting the longitudinal part (7, 200) and, in at least one other direction running perendicular to the latter, contains transverse bores (104, 410, 411) crossing the receiving bore, at the one end of said transverse bores in each case one opto-transmitter (106) being arranged and at the other end of said transverse bores in each case one opto-receiver (100) being arranged, and in that an electronic measuring arrangement (12 to 15) for measuring the penetration depth of the longitudinal part (7, 200) into the receiving bore (105, 400) is connected after the opto-receivers (100).

2. Opto-electronic length measuring device according to Claim 1, characterized in that the longitudinal part which can be introduced into the measuring head (1) is a tool (7) guided by a feed screw (3) via a spindle drive (2), a feed limiter means (5) being applied to the shank of said tool at a defined interval, in that, in front of the measuring head, a stop (6) is provided for the feed limiter means (5) to be applied and in that, at every transverse bore, in each case one lens (107) is connected in front of the opto-transmitter (106) and of the opto-receiver (100) and in addition a diaphragm (102) is connected in front of the opto-receiver (100).

3. Opto-electronic length measuring device according to Claim 1, characterized in that the receiving bore (105) of the measuring head (1) opens at its front end into a chamber (204), in which a resetting spring (201) is located which presses against a flange (205) of the longitudinal part (200) projecting into the receiving bore and constructed as a plug gauge, and in that, at every transverse bore, in each case one diaphragm (104) is connected in front of the opto-transmitter (106) and the opto-receiver (100).

4. Opto-electronic length measuring device according to Claim 1, characterized in that, in the measuring head (1) there are applied as transverse bores to transverse bores (410, 411) lying perpendicular to one another and a flush gas channel bore (409) which is diagonal to these transverse bores (410, 411) forming a system of two coordinates and which is at the same level and through which a gas introduced under pressure can be blown, in that the receiving bore (.05) of the measuring head (1) is provided with a thread (412), into which receiving bore in each case one adjustment screw (402, 406) provided with a longitudinal bore (407) is screwed in from both sides until the gap (418) resulting between both adjustment screws (402, 406) lies exactly on the optical axes (413) defined by the opto-transmitter (403) and opto-receiver (404).

5. Opto-electronic penetration depth measuring device according to one of the preceding claims, characterized in that means are provided for privileging one of the opto-receivers as a function of a predetermined standard value obtained first.

6. Opto-electronic length measuring device according to one of Claims 2 and 3, characterized in that the diaphragms (102) have a rectangular opening.

7. Opto-electronic length measuring device according to one of the preceding Claims 2 and 3, characterized in that the diaphragms (102) have a cross-shaped opening.

8. Opto-electronic length measuring device according to one of Claims 2 and 3, characterized in that the diaphragms (102) have a triangular opening.

9. Opto-electronic length measuring device according to Claim 1, characterized in that the measuring arrangement (12...15) consists of a measuring amplifier (12) and a digital indicator (13) connected downstream of the latter.

10. Opto-electronic length measuring device according to one of Claims 1 to 9, characterized in that the measuring arrangement (12...15) consists of a measuring amplifier (12) and an analog indicator (14) connected downstream of the latter.

11. Opto-electronic length measuring device according to one of Claims 1, 9 and/or 10, characterized in that the measuring arrangement (12...15) consists of a measuring amplifier (12) and an automatic interface (15).

12. Opto-electronic length measuring device according to Claim 2, characterized in that the tool (7) is a drill.

13. Opto-electronic penetration depth measuring device according to Claim 2, characterized in that the feed limiter means is an adjustment ring.

**Revendications**

1. Appareil optoélectronique de mesure de longueurs, comportant une tête optoélectronique de mesure (1) pouvant être réglée et bloquée sur un rail de réglage (10), et une partie longitudinale (7, 200), caractérisé par le fait que la tête de mesure (1) possède un perçage récepteur (105) s'étendant dans une direction et permettant l'insertion de la partie longitudinale (7, 200) et contient, dans au moins une autre direction perpendiculaire à la précédente, des perçages transversaux (104, 410, 411) croisant le perçage récepteur et à une extrémité desquels est disposée respectivement une source de lumière (106) et à l'autre extrémité desquels est disposé respectivement un récepteur de lumière (100), et qu'en aval des récepteurs de lumière (100) est branché un dispositif électronique de mesure (12 à 15) servant à mesurer la profondeur de pénétration de la partie longitudinale (7, 200) dans le perçage récepteur (105, 400).

2. Apparteil optoélectronique de mesure de longueurs suivant la revendication 1, caractérisé par le fait que la partie longitudinale, qui peut être insérée dans la tête de mesure (1), est un outil (7), qui est guidé par une broche d'avance (3) par l'intermédiaire d'un dispositif d'entraînement à broche (2) et sur la tige duquel est monté, à une distance définie, un moyen (5) de limitation de l'avance, qu'il est prévu en avant de la tête de mesure, une butée (6) pour le moyen (5) de limitation de l'avance, qui doit être installé, et que pour chaque perçage transversal, il est prévu respectivement une lentille (107) en avant de la source de lumière (106) et du récepteur de lumière (100) et qu'il est prévu en outre un diaphragme (102) en avant du récepteur de lumière (100).

3. Appareil optoélectronique de mesure de longueurs suivant la revendication 1, caractérisé par le fait que le perçage récepteur (105) de la tête de mesure (1) débouche, au niveau de son extrémité avant, dans une chambre (204), dans laquelle est situé un ressort de rappel (201), qui s'applique contre une bride (205) de la partie longitudinale (200) qui pénètre dans le perçage récepteur et est réalisée sous la forme d'un mandrin de mesure, et que pour chaque perçage transversal, un diaphragme (104) est installé respectivement en avant de la source de lumière (106) et en avant du récepteur de lumière (100).

4. Appareil optoélectronique de mesure de longueurs suivant la revendication 1, caractérisé par le fait que dans la tête de mesure (1) sont ménagés, en tant que perçages transversaux, deux perçages transversaux (410, 411), perpendiculaires entre eux, et un perçage (409) formant canal pour des gaz de balayage, qui s'étend en diagonale par rapport à ces perçages transversaux (410, 411) formant un système d'axes, et qui est situé à la même hauteur et dans lequel on peut produire par soufflage un gaz introduit sous pression, que le perçage récepteur (105) de la tête de mesure (1) est pourvu d'un taraudage (412), dans lequel des vis de réglage (402, 406), qui sont pourvues d'un perçage longitudinal (407) sont vissées, à partir des deux côtés, jusqu'à ce que la fente (418) apparaissant entre les deux vis de réglage (402, 406) soit alignée exactement sur l'axe optique (413) défini par la source de lumière (403) et le récepteur de lumière (404).

5. Appareil optoélectronique de mesure de profondeurs de pénétration suivant l'une des revendications précédentes, caractérisé par le fait qu'il est prévu des moyens pour privilégier l'un des récepteurs de lumière en fonction d'une valeur de référence prédéterminée atteinte en premier.

6. Appareil optoélectronique de mesure de longueurs suivant l'une des revendications 2 et 3, caractérisé par le fait que les diaphragmes (102) possèdent une ouverture rectangulaire.

7. Appareil optoélectronique de mesure de longueur suivant l'une des revendications précédentes 2 et 3, caractérisé par le fait que les diaphragmes (102) possèdent une ouverture cruciforme.

8. Appareil optoélectronique de mesure de longueurs suivant l'une des revendications 2 et 3, caractérisé par le fait que les diaphragmes (102) possèdent une ouverture triangulaire.

9. Appareil optoélectronique de mesure de longueurs suivant la revendication 1, caractérisé par le fait que le dispositif de mesure (12...15) est constitué par un amplificateur de mesure (12) et par un dispositif d'affichage numérique (13) branché en aval de cet amplificateur.

10. Appareil optoélectronique de mesure de longueurs suivant l'une des revendications 1 ou 9, caractérisé par le fait que le dispositif de mesure (12...15) est constitué par un amplificateur de mesure (12) et par un dispositif d'affichage analogique (13) branché en aval de cet amplificateur.

11. Appareil optoélectronique de mesure de longueurs suivant l'une des revendications 1, 9 et/ou 10, caractérisé par le fait que le dispositif de mesure (12...15) est constitué par un amplificateur de mesure et par une interface (15) de liaison à un automate.

12. Appareil optoélectronique de mesure de longueurs suivant la revendication 2, caractérisé par le fait que l'outil (7) est un foret.

13. Appareil optoélectronique de mesure de profondeurs de pénétration suivant la revendication 2, caractérisé par le fait que les moyens de limitation de l'avance sont constitués par une bague de réglage.

FIG 1

FIG 2

FIG 3

S

203

100

102

202

201

205

105

200

103

204

102

104

106

FIG 4a

413

b

404

400

401

402

407

409

406

405

412

408

403

407

FIG 4b

410

400

412

411

409

## FIG 5

## FIG 6

$$v_t = \frac{t_{on}}{T}$$

EP 0 224 840 B1

FIG 7

FIG 8

FIG 9